# EUROPÄISCHE PATENTSCHRIFT

(11) **EP 0 958 028 B1**
(45) Veröffentlichungstag und Bekanntmachung des Hinweises auf die Patenterteilung: **22.08.2001**
(21) Anmeldenummer: 97928251.4
(22) Anmeldetag: 19.06.1997
(51) Int. Cl.: B01D 35/10, B01D 33/21

(54) **FILTERTUCH, FILTRIERVERFAHREN UND FILTRIERVORRICHTUNG FÜR DIE FLÜSSIGKEITSFILTRATION**
FILTER CLOTH, FILTER METHOD AND FILTERING DEVICE FOR LIQUID FILTRATION
TISSU FILTRANT, PROCEDE ET DSIPOSITIF POUR LA FILTRATION DE LIQUIDES

(30) Priorität: 19.06.1996 DE 19624483
(43) Veröffentlichungstag der Anmeldung: 24.11.1999
(73) Patentinhaber: Mecana Umwelttechnik AG, 8864 Reichenburg (CH)
(72) Erfinder: SEYFRIED, Carl, Franz, D-30559 Hannover (DE); GRABBE, Ulrich, D-31552 Rodenberg (DE)
(74) Vertreter: Glawe, Delfs, Moll & Partner
(86) Internationale Anmeldenummer: EP9703215
(87) Internationale Veröffentlichungsnummer: WO9748472

(56) Entgegenhaltungen:
- FR-A- 2 366 864
- NL-A- 8 103 750
- US-A- 1 833 315

## Beschreibung

Die Erfindung bezieht sich auf das Gebiet der Flüssigkeitsfiltration mit Hilfe eines Filtertuches. Ein bevorzugtes, aber keineswegs ausschließliches Einsatzgebiet der Erfindung ist die Abwasserreinigung, insbesondere die Filtration von Abwasser, das aus der Nachreinigung nach einer biologische Reinigungsstufe mit simultaner Posphatelimination abläuft, also in der sogenannten dritten Reinigungsstufe einer Abwasserreinigungsanlage.

Mit Filtertüchern arbeitende Filtriervorrichtungen für Flüssigkeiten sind in verschiedenen Konstruktionen bekannt, z.B. in Form von Filterpressen, Scheibenfiltern (EP-B-0 413 178) oder Trommelfiltern. Die Erfindung ist bei Filtriervorrichtungen beliebiger Konstruktion anwendbar. Die in solchen Vorrichtungen verwendeten Filtertücher sind im einfachsten Fall einschichtige Gewebe, die sich wie ein Sieb verhalten, dessen Sieblöcher durch die Maschen des Gewebes definiert sind. In der Regel haben Filtertücher jedoch einen mehrschichtigen Aufbau mit einem Stützgewebe mit relativ großer Maschenweite und einer filteraktiven Schicht, in der die Fäden oder Filamente mehrfach übereinander liegen und ein Tiefen- oder Raumfilter bilden, das verwinkelte und mehrfach gekrümmte Druchflußkanäle aufweist, in denen auch Feststoffpartikel, die kleiner sind als der freie Querschnitt der Fadenzwischenräume, teils durch mechanische Blockierung in den Durchflußkanälen und teils durch Adsorption an deren Wänden zurückgehalten werden können. Eine solche filteraktive Schicht mit Tiefenfilterwirkung wird in der Regel als Nadelfilz oder Wirrfaservlies ausgebildet.

Der Durchflußwiderstand eines solchen Filtertuches ist relativ hoch und nimmt mit zunehmendem Verstopfen der Druchflußkanäle in der Filterschicht rasch zu. Das Filtertuch muß deshalb in relativ kurzen Zeitabständen abgereinigt werden. Dies geschieht in der Regel durch Rückspülen, d.h. durch Hindurchleiten von Flüssigkeit, wie z.B. Frischwasser oder Filtrat, durch das Filtertuch in der der Filtrierrichtung entgegengesetzten Richtung. Wenn die im Filtrierbetrieb von der Flüssigkeit angeströmte Seite des Filtertuches als Vorderseite und die andere Seite als Rückseite bezeichnet wird, dann kann die für das Rückspülen des Filtertuches erforderliche Rückspülströmung erzeugt werden durch Ansaugen von Flüssigkeit an der Vorderseite oder Zuführen von Flüssigkeit unter Druck an der Rückseite des Filtertuches, oder beides. Das Rückspülen kann auf der ganzen Fläche des Filtertuches gleichzeitig oder nur an einem Teilbereich des Filtertuches, der nach und nach über dessen ganze Fläche bewegt wird, durchgeführt werden. Ein Beispiel einer über das Filtertuch bewegbaren Saugeinrichtung für das Rückspülen ist in der bereits erwähnten EP-B-0 413 178 beschrieben.

Diejenigen Feststoffpartikel, die sich beim Filtrieren an der Außenseite des Filtertuches ablagern und dort eine Schicht nach Art einer Pre-Coat-Schicht bilden, die die Filterwirkung unterstützt, lassen sich beim Rückspülen problemlos entfernen. Diejenigen Feststoffpartikel jedoch, die in den zahlreichen engen und verwinkelten Durchflußkanälen der filteraktiven Schicht des Filtertuches eingefangen und blockiert werden, bereiten beim Rückspülen erhebliche Probleme, und zwar in umso stärkerem Maße, je mehr die Schicht den Charakter eines Tiefenfilters hat. In den verschlungenen Durchflußkanälen der filteraktiven Schicht kann keine so hohe Strömungsgeschwindigkeit aufgebracht werden, daß die Feststoffpartikel restlos losgelöst und fortgeschwemmt werden. Der Erhöhung des Druckes bzw. der Strömungsgeschwindigkeit beim Rückspülen sind Grenzen gesetzt, da bei zu hoher Geschwindigkeit das Filtertuch beschädigt wird. Die bisher bekannten Filtertücher, deren als Tiefenfilter wirksame filteraktive Schicht z.B. als Nadelfilz oder Wirrfaservlies ausgebildet ist, lassen sich deshalb nicht restlos abreinigen und setzen sich schon nach relativ kurzer Betriebszeit derart zu, daß sie ausgewechselt werden müssen.

Vorteilhafter ist die Ausbildung des Filtertuches als sogenannter Polstoff, d.h. als ein Flausch-, Plüsch- oder Samtgewebe, das aus einem relativ großmaschigen Stützgewebe und einem z.B. in W-Bindung eingewirkten Flor aus Florfäden besteht. Die Florfäden liegen im Filtrierbetrieb an der Anströmseite des Filtertuches, und ihre Länge, Steifigkeit und Dichte sind so bemessen, daß die Florfäden durch die anströmende Flüssigkeit in eine zum Stützgewebe annähernd parallele Position umgelegt werden und sich dadurch mehrlagig übereinander legen und ein Tiefenfilter bilden, das zwischen den übereinanderliegenden Florfäden zahlreiche enge, verwinkelte und mehrfach gekrümmte Durchflußkanäle bilden, in denen auch Feststoffpartikel, deren Größe kleiner als die lichte Weite der Durchflußkanäle ist, teils mechanisch und teils durch Adsorption festgehalten werden können. Beim Rückspülen sind die Florfäden dagegen einer vom Stützgewebe weggerichteten Flüssigkeitsströmung ausgesetzt und werden dadurch relativ zum Stützgewebe aufgerichtet und stehen dann weitgehend zueinander und zur Strömungsrichtung parallel, wodurch sich das Volumen der Florschicht stark vergrößert und die zwischen den Florfäden bestehenden Durchflußkanäle geöffnet und begradigt werden. Dadurch wird einerseits der Durchflußwiderstand für die Rückspülflüssigkeit verringert, so daß diese mit hoher Geschwindigkeit zwischen den Florfäden durchströmen kann, und anderseits werden die zuvor in den Durchflußkanälen mechanisch blockierten Feststoffpartikel freigegeben, so daß sie von der Rückspülflüssigkeit unter Überwindung der Adsorptionskräfte abgelöst und weggespült werden können.

Verfahren und Vorrichtungen zum Filtrieren von Flüssigkeiten, unter Verwendung eines Polstoffes als Filtermedium und unter Anwendung des vorstehend beschriebenen Aufrichteffekts beim Rückspülen sind aus FR-A-2 366 864 und NL-A-81 03 750 bekannt. Bei dem Verfahren und der Vorrichtung gemäß NL-A-81 03 750 sind auch die Merkmale des Oberbegriffs der Ansprüche 1 und 4 bekannt, d. h. die das Aufrichten der Florfäden bewirkende Rückspülung wird mittels eines Saugbalkens mit Saugschlitz erzeugt, der der Florseite des Filtertuches in geringem Abstand gegenübersteht und parallel zu diesem bewegt wird.

Der Erfindung liegt die Aufgabe zugrunde, ein Verfahren und eine Vorrichtung für die Flüssigkeitsfiltration der angegebenen bekannten Art so zu verbessern, daß eine effektivere und gründlichere Reinigung des Filtertuchs beim Rückspülen ermöglicht wird.

Die Aufgabe wird erfindungsgemäß durch das im Anspruch 1 angegebene Filtrierverfahren und die im Anspruch 4 angegebene Filtriervorrichtung gelöst.

Es wurde erfindungsgemäß gefunden, daß es vorteilhaft ist, die Polfäden des Filtertuchs durch mechanische Einwirkung des Saugbalkens solange am Aufrichten zu hindern, bis sie den Bereich des Saugschlitzes erreicht haben und sich in diesem ruckartig aufrichten können. Hierdurch wird das Lockern und Freisetzen der in der Polschicht des Filtertuches abgelagerten Feststoffpartikel begünstigt.

Die Erfindung wird im folgenden anhand von Ausführungsbeispielen unter Bezugnahme auf die Zeichnungen näher erläutert. Es zeigt:
- Fig. 1: eine vereinfachte schematische Schnittdarstellung der Gewebestruktur eines erfindungsgemäßen Filtertuches
- Fig. 2: in ähnlicher schematischer Darstellung wie Fig. 1 das Filtertuch während des Filtrierbetriebes
- Fig. 3: in vergrößerter schematischer Darstellung ein Detail des Filtertuches
- Fig. 4: einen schematischen Längsschnitt einer als Scheibenfilter ausgebildeten Filtriervorrichtung
- Fig. 5: ein schematisches Detail der Filtriervorrichtung gemäß Fig. 4.

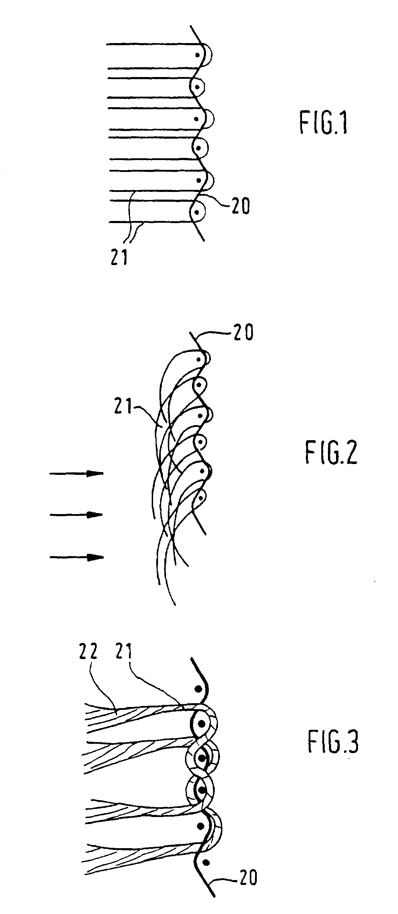

Die in Fig. 1 sehr schematisch und vereinfacht dargestellte Struktur des erfindungsgemäßen Filtertuches besteht aus einem Stütz- oder Grundgewebe 20 und in das Stützgewebe 20 eingebundenen Florfäden 21, die vom Stützgewebe 20 nach einer Seite hin abstehen und einen Flor des Filtertuches bilden. Das Stützgewebe 20 ist vereinfacht mit Kett- und Schußfäden dargestellt. Der Ausdruck Stützgewebe soll aber auch textile Flächengebilde, die nicht durch Weben, sondern z.B. durch Stricken oder Wirken oder in Mischtechnik hergestellt sind, umfassen. Die Maschenweite des Stützgewebes 20 ist vorzugsweise größer als die Teilchengröße der aus der Flüssigkeit zu filtrierenden Feststoffpartikel. Die Florfäden 21 sind in beliebiger, dem Fachmann bekannter Art und Weise in das Stützgewebe 20 eingebunden.

Vorzugsweise bestehen sowohl das Stützgewebe als auch die Florfäden aus Kunststoffilamenten, deren glatte Oberfläche das Abreinigen begünstigt. Mindestens die Florfäden 21 sind aus Monofilamenten zusammengesetzte Multifilamente, die sich mindestens im Bereich ihrer freien Enden in ihre Einzelfilamente auffächern können, wie schematisch in Fig. 3 bei 22 gezeigt. Auch die Fäden des Stützgewebes 20 können Multifilamente sein. Als Material für das Stützgewebe 20 und Florfäden 21 kommen vorzugsweise Polyamid oder Polyester in Frage. Die Bindung der Florfäden 21 am Stützgewebe 20 kann durch partielles Schweißen und/oder Kleben verstärkt sein.

In der folgenden Beschreibung wird der Einfachheit halber die die Florfäden 21 aufweisende Seite des Filtertuches (die linke Seite in Fig. 1) als Vorderseite und die andere Seite als Rückseite bezeichnet. Beim Filtrieren wird das Filtertuch so verwendet, daß seine Vorderseite, d.h. die Florfäden 21, von der zu filtrierenden Flüssigkeit angeströmt werden. Durch die anströmende, zu filtrierende Flüssigkeit werden die Florfäden 21 in Richtung auf das Stützgewebe 20 umgelegt bzw. flachgelegt, so daß sie die in Fig. 2 schematisch angedeutete Lage einnehmen, in der jeweils benachbarte Florfäden 21 in mehreren Schichten übereinander liegen und eine filteraktive Schicht von der Art eines Nadelfilzes oder Wirrfaservlieses bilden, d.h. ein Tiefenfilter, das zahlreiche enge, lange und verwinkelte Durchflußkanäle bildet. Wichtig für dieses gewünschte Verhalten des Filtertuches ist eine geeignete Wahl der Länge, Steifigkeit und Dichte der Florfäden 21. Diese Parameter sind gegenseitig voneinander abhängig, so daß z.B. dickere bzw. steifere Florfäden 21 eine größere Länge benötigen. Die Länge der Florfäden 21 wird in der Regel mindestens 10mm, vorzugsweise mehr als 12mm betragen. Kürzere Florfäden sind entweder zu steif oder ergeben im Filtrierbetrieb in der Position gemäß Fig. 2 nicht die gewünschte "Schichtdicke" bzw. Raumtiefe der filteraktiven Schicht.

Beim Rückspülen des Filtertuches wird Spülwasser, z.B. Frischwasser oder Filtrat, von der Rückseite (rechte Seite in Fig. 1 und Fig. 2) her durch das Filtertuch geleitet, und zwar mit ausreichender Geschwindigkeit, so daß sich die umgelegten Florfäden 21 aufrichten und die in Fig. 1 schematisch angedeutete Position einnehmen. Hierbei verschwinden die verwinkelten Kanäle zwischen den Florfäden und machen einem großen freien Querschnitt Platz, durch den die Schmutzpartikel ohne Behinderung oder erneute Ablagerung fortgeschwemmt werden. Bei ausreichend großer Strömungsgeschwindigkeit der Rückspülflüssigkeit kann die Turbulenz der Rückspülströmung sogar ein Flattern oder "Ausschütteln" der Florfäden bewirken, wodurch die Freisetzung der Schmutzpartikel zusätzlich begünstigt wird. Versuche haben gezeigt, daß auf diese Weise eine praktisch restlose Abreinigung des Filtertuches durch Rückspülen erzielt werden kann, insbesondere wenn die Maschen des Stützgewebes 20 so groß bemessen sind, daß sich im Stützgewebe 20 selbst keine Feststoffteilchen festsetzen können.

Die Gefahr eines allmählichen Zusetzens des Filtertuches ist nicht gegeben, weil sich seine durch die Florfäden gebildete filteraktive Schicht durch den Aufrichteffekt und die Volumenvergrößerung beim Rückspülen jederzeit vollständig abreinigen läßt. Im Filtrierbetrieb ist die Filterleistung des erfindungsgemäßen Filtertuches derjenigen von handelsüblichen Filtertüchern aus z.B. Nadelfilz oder Wirrfaservlies völlig gleichwertig. Versuche mit einer aus der Nachreinigung nach einer biologischen Stufe mit Phosphatelimination ablaufenden Suspension haben ergeben, daß diese Suspension mit einem Feststoffgehalt von z.B. 20mg/l im Zulauf des Filters bis auf einen Restfeststoffgehalt von maximal 4mg/l im Filtrat gereinigt werden konnte. Damit ist das erfindungsgemäße Filtertuch zur Einhaltung der gesetzlichen Auflagen für die Phosphatelimination in der dritten Reinigungsstufe einer Abwasserreinigungsanlage hervorragend geeignet.

Dank des wirksamen Rückspülvorganges ist die benötigte Menge an Rückspülflüssigkeit sehr gering. Versuche haben gezeigt, daß die für eine einwandfreie Reinigung benötigte Menge der Rückspülflüssigkeit nur in der Größenordnung von 0,5% bis max. 2% des Durchsatzes der zu filtrierenden Flüssigkeit liegt.

Wie bereits erwähnt, kann das erfindungsgemäße Filtertuch in Filtriervorrichtungen beliebiger Bauart, z.B. Filterpressen, Scheibenfilter, Trommelfilter und dergleichen eingesetzt werden. In der Regel sind für den Einsatz des erfindungsgemäßen Filtertuches keinerlei konstruktive Änderungen an den Filtriervorrichtungen erforderlich, d.h. vorhandene Filtermaschinen können mit erfindungsgemäßen Filtertüchern nachgerüstet werden.

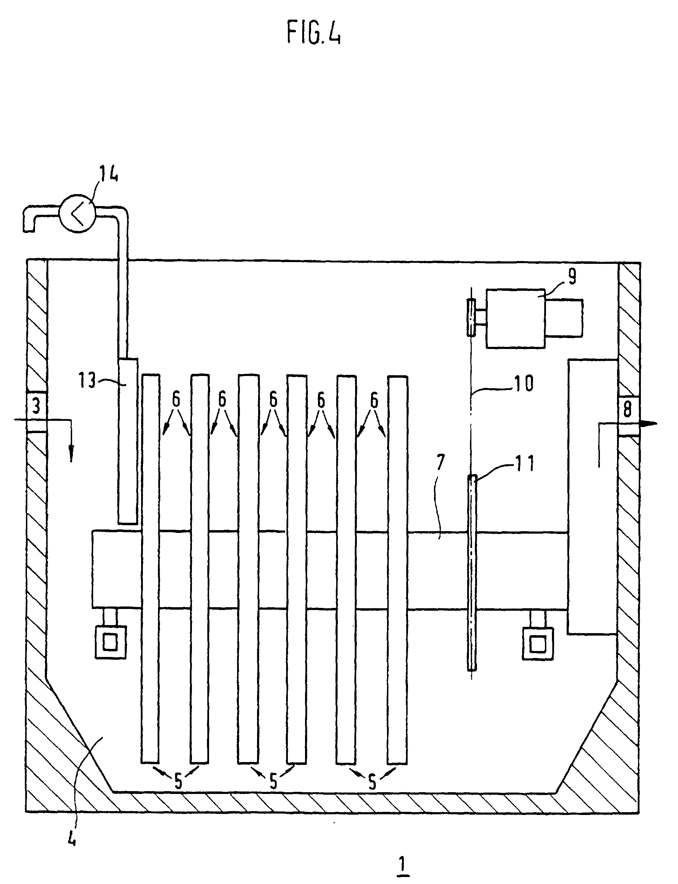

Als Ausführungsbeispiel ist in Fig. 4 schematisch eine als Scheibenfilter ausgebildete Filtriervorrichtung dargestellt. Sie kann vorzugsweise eingesetzt werden zur Reinigung von Abwasser, das biologisch vorbehandelt und dann einer chemischen Behandlung zur Ausfällung von gelösten Verunreinigungen, z.B. Phosphat, unterworfen wurde. Das vorbehandelte Abwasser gelangt über einen Zulauf 3 in ein Becken 4, in dem auf einer rotierenden Tragwelle 7 eine Anzahl von scheibenförmigen Filterkörpern 5 angeordnet sind, die jeweils mit Filtertüchern 6 bespannt sind. Das Wasser strömt durch die Filtertücher 6 in das Innere der scheibenförmigen Filterkörper 5 und wird über die rotierende Welle 7 zum Ablauf 8 abgezogen. Ein Motor 9 bewirkt über eine Kette 10 und ein Ritzel 11 die Drehung der Welle 7 mit den scheibenförmigen Filterkörpern 5. Jeder Filterkörper 5 besteht aus einem (nicht dargestellten) Tragrahmen, der mit der Filtertuch 6 so bespannt ist, daß die Florfäden des Filtertuches an der Außenseite des scheibenförmigen Filterkörpers 5 liegen. Jeder scheibenförmige Filterköper 5 kann auch aus mehreren Sektoren zusammengesetzt sein, die jeweils einzeln mit einem sackartigen Filtertuch bespannt sind, wie in EP-B-0 413 178 beschrieben.

Das Rückspülen der Filtertücher 6 erfolgt durch Ansaugen von Flüssigkeit an der Vorderseite jedes Filtertuches 6, d.h. an der Außenseite jedes scheibenförmigen Filterkörpers 5. In Fig. 4 ist schematisch ein Saugbalken 13 eingezeichnet, der dem ersten scheibenförmigen Filterelement 5 mit geringem Abstand gegenüber steht und an eine Absaugvorrichtung 14 angeschlossen ist. Der Saugbalken 14 hat eine dem Filterkörper 5 zugewandte schlitzförmige Öffnung, und durch Drehung der Welle 7 wird das Filterelement 5 an der schlitzförmigen Öffnung vorbei bewegt, so daß nach und nach dessen ganze Oberfläche durch Rückspülen gereinigt werden kann. Dieses Rückspülen kann nach Wunsch kontinuierlich während des laufenden Filtrierbetriebes durchgeführt werden, oder bei unterbrochenem Filtrierbetrieb. Wenn nur ein einziger Saugbalken 13 vorgesehen ist, muß dieser mit einer geeigneten Einreichtung derart ortsbeweglich sein, daß er nacheinander in Arbeitsstellungen gegenüber jeder der beiden Stirnseiten jedes der scheibenförmigen Filterkörper 5 gebracht werden kann. Alternativ kann eine Vielzahl von ortsfest installierten Saugbalken 13 vorgesehen sein, die jeweils einer der beiden Stirnseiten der einzelnen scheibenförmigen Filterelemente 5 zugeordnet sind.

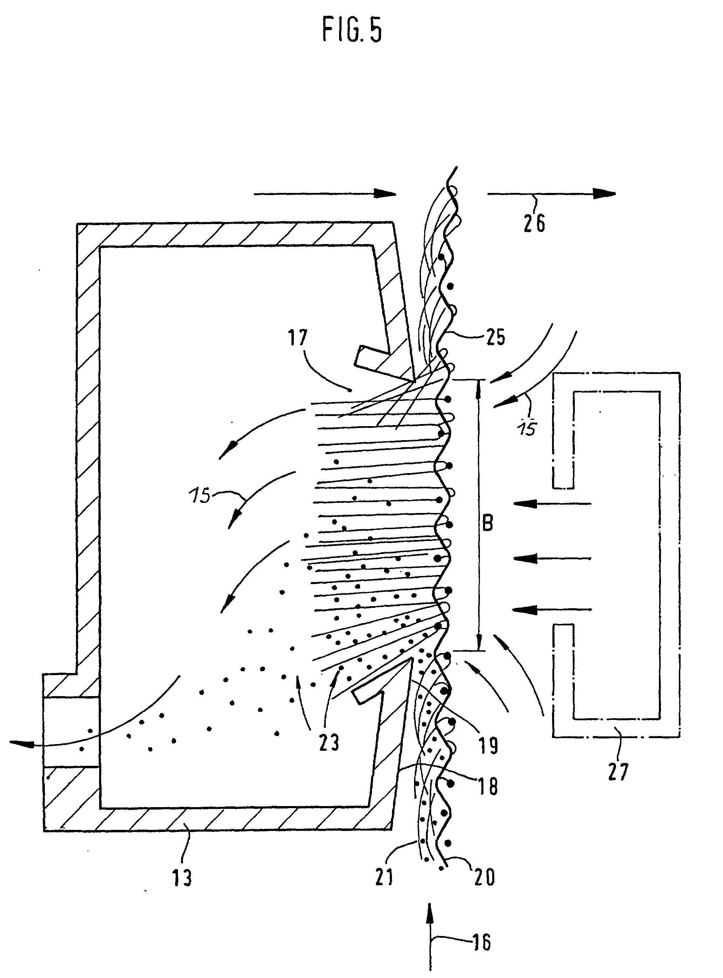

Wie in Fig. 5 schematisch angedeutet, steht der oder jeder Saugbalken 13 der mit den Florfäden 21 versehenen Vorderseite des Filtertuches 6 mit so geringem Abstand gegenüber, daß er gleichzeitig mechanisch auf die Florfäden 21 einwirkt. Wenn angenommen wird, daß sich das Filtertuch 6 in Richtung des Pfeiles 16 relativ zum Saugbalken 13 bewegt (also in Fig. 5 nach oben), so gelangen die Florfäden 21 nacheinander in den Bereich des Saugschlitzes 17 des Saugbalkens 13. Bevor die Florfäden 21 den Schlitz 17 erreichen, werden sie von dem in Fig. 5 unteren Bereich 18 der ihnen zugewandten Wandung des Saugbalkens 13 am Aufrichten gehindert. Sobald die Florfäden 21 den Schlitz 17 erreichen, werden sie durch die vom Saugbalken 13 durch das Filtertuch 6 hindurch angesaugte Strömung 15 ruckartig aufgerichtet. Eine scharfkantige Ausbildung des Randes 19 des Saugschlitzes 17 begünstigt das ruckartige Aufrichten.

Durch das Aufrichten der Florfäden 21 werden die zwischen ihnen festgehaltenen Schmutzpartikel 23 freigesetzt und mit der vom Saugbalken 13 angesaugten Rückspülströmung abtransportiert. Diese Freisetzung der Schmutzpartikel wird durch die mechanische Einwirkung auf die Florfäden 21, nämlich einerseits ruckartiges Aufrichten bei Erreichen des Schlitzes 17, und andererseits ein durch ausreichend starke Rückspülströmung erzeugtes "Flattern" der Florfäden 21 unterstützt. Um eine ausreichende Bewegungsfreiheit der aufgerichteten Flurfäden 21 zu erreichen sollte die Breite B des Saugschlitzes 17 im Verhältnis zur Länge der Florfäden 21 aureichend groß sein. Die Schlitzbreite B kann etwas kleiner sein als die Länge der Florfäden 21 und kann vorzugsweise ein Vielfaches (bis max. das 10-fache) der Länge der Florfäden betragen. Nach Passieren des Schlitzes 17 werden die nunmehr von den Schmutzpartikeln befreiten Florfäden 21 durch die nacheilende Kante 25 des Saugschlitzes 17 wieder flachgelegt, wodurch die sofortige Bildung einer neuen Tiefenfilterschicht für den anschließenden bzw. kontinuierlich weiterlaufenden Filtervorgang in Richtung der Strömungspfeile 26 begünstigt wird.

Die mechanische Einwirkung des Saugbalkens 13 auf die Florfäden 21 des Filtertuches 6 sollte vorzugsweise derart sein, daß die in den Bereich des Schlitzes 17 gelangenden Florfäden 21 beim Übergang vom umgelegten in den aufgerichteten Zustand nach Möglichkeit bis zum Stützgewebe 20 hin auseinander gespreizt, d.h. "gescheitelt" werden. Eine hierfür geeignete Profilierung der dem Filtertuch 6 zugewandten Seite des Saugbalkens 13, gegebenenfalls mit zusätzlichen Vorsprüngen, kann durch einfache Versuche leicht herausgefunden werden. Die nacheilende Kante 25 des Saugschlitzes 17 braucht nicht scharfkantig zu sein, sondern kann z.B. auch abgerundet sein, um ein sanftes Umlegen der gereinigten Florfäden zu begünstigen. Es sind jedoch auch Anordnungen denkbar, bei denen das Filtertuch 6 hin- und hergehend, z.B. im Pilgerschritt, am Saugbalken 13 vorbeibewegt wird, wobei in diesem Fall eine zur Mittellinie des Saugschlitzes 17 symmetrische Gestaltung des Saugbalkens 13 vorteilhaft ist.

Das Rückspülen durch Absaugen kann durch zusätzliche Zuführung von Rückspülflüssigkeit und Druck von der Rückseite des Filtertuches her unterstützt werden. Wenn die Konstruktion der Filtriervorrichtung dies zuläßt (bei dem Scheibenfilter gemäß Fig. 4 dürfte dies nicht der Fall sein), dann kann an der Rückseite des Filtertuches 6 ein Spritzbalken 27 angeordnet und mit dem Saugbalken 13 mitbewegt werden, der durch eine Schlitzöffnung oder einer Reihe von Einzelöffnungen einen zur Rückseite des Filtertuches gerichteten Rückspülstrahl erzeugt. Dies wäre z.B. bei Trommelfiltern denkbar, wobei der Spritzbalken 27 im Inneren und der Absaugbalken 13 an der Außenseite einer sich drehenden, mit dem Filtertuch 6 bespannten Trommel ortsfest angeordnet sein können.

Der Rückspülvorgang kann durch zusätzliche, dem Fachmann an sich bekannte Maßnahmen unterstützt werden. Beispielsweise kann die Rückspülflüssigkeit (Frischwasser oder Filtrat) zusätzlich angesäuert werden, um verkrusteste Schmutzpartikel zu lösen. Um ein unerwünschtes Festhalten von Schmutzpartikeln durch statische Aufladung zu verhindern, können die Fäden des Filtertuches, mindestens aber dessen Florfäden mit an sich bekannten Maßnahmen antistatisch ausgerüstet sein, z.B. durch Metallbeschichtung, Einlagerung von leitfähigen Metall oder Kohlenstoffpartikel oder chemische antistatische Behandlung.

Wie eingangs erwähnt, ist die Erfindung bei Filtriervorrichtungen beliebiger Konstruktion anwendbar. Entsprechend der Art der Filtriervorrichtung können auch die Mittel zum Erzeugen der notwendingen Relativbewegung zwischen dem Saugbalken und dem Filtertuch in der zum Filtertuch parallelen Bewegungsrichtung ausgestaltet werden. Dies kann nicht nur, wie bei dem beschriebenen Ausführungsbeispiel, durch Bewegen des Filtertuchs bei stationärem Saugbalken geschehen, sondern auch durch Bewegen des Saugbalkens.

## Patentansprüche

1. Verfahren zum Filtrieren von Flüssigkeit, bei dem die zu filtrierende Flüssigkeit durch ein Filtertuch geleitet wird, das ein Stützgewebe (20) und auf der von der Flüssigkeit angeströmten Seite einen Flor aus Florfäden (21) aufweist, deren Länge, Steifigkeit und Dichte so bemessen sind, daß die Florfäden (21) sich durch die anströmende Flüssigkeit zum Stützgewebe (20) hin umlegen und ein Tiefenfilter mit verwinkelten und mehrfach gekrümmten Durchflußkanälen bilden, und bei dem das Filtertuch in zeitlichen Abständen rückgespült wird durch Bewegen eines einen Saugschlitz (17) aufweisenden Saugbalkens (13) über die mit Florfäden versehene Seite des Filtertuches, wobei der Saugbalken durch Ansaugen von Flüssigkeit durch das Filtertuch hindurch eine Rückspülströmung erzeugt, durch die die Florfäden (21) im Bereich des Saugschlitzes (17) zu einer vom Stützgewebe (20) abstehenden Position aufgerichtet werden, dadurch **gekennzeichnet**, daß die Florfäden (21) vor dem Erreichen des Saugschlitzes (17) einer mechanischen Einwirkung durch eine ihnen zugewandte Fläche (18) des Saugbalkens (13) ausgesetzt werden, durch die sie am Aufrichten gehindert werden.

2. Verfahren nach Anspruch 1, dadurch **gekennzeichnet**, daß die Florfäden (21) durch eine scharfkantige Begrenzung (19) des Saugschlitzes (17) zu einem ruckartigen Aufrichten beim Erreichen des Saugschlitzes veranlaßt werden.

3. Verfahren nach Anspruch 1 oder 2, dadurch **gekennzeichnet**, daß das Aufrichten der Florfäden in einem Saugschlitz (17) erfolgt, dessen Breite (B) ein Vielfaches der Länge der Florfäden (21) beträgt.

4. Vorrichtung zum Filtrieren von Flüssigkeit, mit einem im Strömungsweg der zu filtrierenden Flüssigkeit angeordneten Filtertuch, das auf seiner angeströmten Seite einen Flor aus Florfäden (21) aufweist, deren Länge, Steifigkeit und Dichte so bemessen sind, daß sie durch die Strömung der zu filtrierenden Flüssigkeit umgelegt werden und ein Tiefenfilter mit verwinkelten und mehrfach gekrümmten Strömungskanälen bilden,
einem der Florseite des Filtertuches gegenüberstehenden Saugbalken (13) mit Saugschlitz (17) zum Ansaugen einer Rückspülströmung durch das Filtertuch hindurch mit solcher Strömungsgeschwindigkeit, daß sich die Florfäden in der Rückströmung in eine vom Filtertuch abstehende Position aufrichten,
und Mitteln zum Erzeugen einer Relativbewegung zwischen dem Saugbalken und dem Filtertuch (6) in einer zum Filtertuch parallelen Bewegungsrichtung, dadurch **gekennzeichnet**, daß der Saugbalken (13) mindestens an der bezüglich der Relativbewegung vorne liegenden Seite des Saugschlitzes (17) eine dem Filtertuch (6) zugewandte Fläche (18) aufweist, die dem Filtertuch (6) mit so geringem Abstand gegenübersteht, daß sie mechanisch auf die Florfäden (21) einwirkt und diese am Aufrichten hindert.

5. Vorrichtung nach Anspruch 4, dadurch **gekennzeichnet**, daß die Fläche (18) am Rand des Saugschlitzes (17) eine scharfe Kante (19) bildet.

6. Vorrichtung nach Anspruch 4 oder 5, dadurch **gekennzeichnet,** daß die Breite (B) des Saugschlitzes (17) größer ist als die Länge der Florfäden (21).

7. Vorrichtung nach Anspruch 6, dadurch **gekennzeichnet**, daß die Breite (B) des Saugschlitzes (17) ein Vielfaches der Länge der Florfäden (21) beträgt.

8. Vorrichtung nach einem der Ansprüche 4 bis 7, dadurch **gekennzeichnet**, daß die Florfäden (21) aus Multifilamenten bestehen, die sich in den Endbereichen (22) der Florfäden (21) in Einzelfilamente auflösen.

## Claims

1. A method of filtering liquid, in which the liquid to be filtered is directed through a filter cloth which has a supporting fabric (20) and on the liquid inflow side has a pile of pile threads (21), the length, stiffness and density of which are so calculated that the pile threads (21) are laid flat by the inflowing liquid towards the supporting fabric (20) and form a depth filter with angular and multiply curved throughflow passages, and in which the filter cloth is back-flushed at time intervals by moving a suction beam (13) having a suction slot (17) across the side of the filter cloth provided with pile threads, wherein the suction beam creates a back-flushing flow by the intake of liquid through the filter cloth, by means of which in the vicinity of the suction slot (17) the pile threads (21) are straightened into a position projecting from the supporting fabric (20), characterised in that, before reaching the suction slot (17), the pile threads (21) are subjected to a mechanical action by a surface (18) of the suction beam (13) facing them, by which they are prevented from straightening.

2. A method according to Claim 1, characterised in that upon reaching the suction slot (17) the pile threads (21) are caused suddenly to straighten by a sharp-edged boundary (19) of the suction slot.

3. A method according to Claim 1 or 2, characterised in that the straightening of the pile threads takes place in a suction slot (17) whose width (B) is a multiple of the length of the pile threads (21).

4. An apparatus for filtering liquid, with a filter cloth which is arranged in the flow path of the liquid to be filtered and which on its inflow side has a pile of pile threads (21), the length, stiffness and density of which are so calculated that they are laid flat by the flow of the liquid to be filtered and form a depth filter with angular and multiply curved flow passages,
with a suction beam (13) which is situated opposite the pile side of the filter cloth and which has a suction slot (17) for the intake of a back-flushing flow through the filter cloth at such a rate of flow that the pile threads are straightened in the return flow into a position projecting from the filter cloth,
and with means for creating a relative movement between the suction beam and the filter cloth (6) in a movement direction parallel to the filter cloth, characterised in that the suction beam (13) has at least on the side of the suction slot (17) situated at the front in relation to the relative movement a surface (18) facing the filter cloth (6), which surface is situated opposite the filter cloth (6) at such a small distance therefrom that it acts mechanically on the pile threads (21) and prevents them from straightening.

5. An apparatus according to Claim 4, characterised in that the surface (18) at the edge of the suction slot (17) forms a sharp edge (19).

6. An apparatus according to Claim 4 or 5, characterised in that the width (B) of the suction slot (17) is greater than the length of the pile threads (21).

7. An apparatus according to Claim 6, characterised in that the width (B) of the suction slot (17) is a multiple of the length of the pile threads (21).

8. An apparatus according to any one of Claims 4 to 7, characterised in that the pile threads (21) consist of multifilaments which unravel into individual filaments in the end zones (22) of the pile threads (21).

## Revendications

1. Procédé de filtrage de liquides dans lequel le liquide à filtrer est guidé à travers un tissu filtrant qui comporte un tissu de soutien (20) et, sur le côté d'arrivée du liquide, un non-tissé fait de fils de poils (21) dont la longueur, la rigidité, la densité sont telles que les fils de poils (21) se plient, sous l'effet du liquide arrivant, vers le tissu de soutien (20) et forment un filtre de profondeur avec des canaux de passage coudés et recourbés plusieurs fois, et dans lequel le tissu filtrant est lavé à contre-courant à intervalles de temps, par déplacement d'une barre d'aspiration (13) qui comporte une fente d'aspiration (17), sur la face du tissu filtrant pourvu des fils de poils, la barre d'aspiration produisant, par aspiration de liquide à travers le tissu filtrant, un courant de lavage à contre-courant par lequel les fils de poils (21) sont dressés dans la zone de la fente d'aspiration (17), en une position qui dépasse du tissu de soutien (20), caractérisé en ce que les fils de poils (21) sont soumis, avant qu'ils n'atteignent la fente d'aspiration (17), à un effet mécanique par une surface (18) de la barre d'aspiration (13), tournée vers ces fils, effet qui les empêche de se dresser.

2. Procédé selon la revendication 1, caractérisé en ce qu'une délimitation (19) à arête vive de la fente d'aspiration (17) oblige les fils de poils (21) à se dresser brusquement lorsqu'est atteinte la fente d'aspiration.

3. Procédé selon la revendication 1 ou 2, caractérisé en ce que les fils de poils se dressent dans une fente d'aspiration (17) dont la largeur (B) est un multiple de la longueur des fils de poils (21).

4. Dispositif de filtrage de liquide, comportant un tissu filtrant disposé dans le parcours d'écoulement du liquide à filtrer et qui présente, sur son côté d'arrivée, un non-tissé fait de fils de poils (21) dont la longueur, 1a rigidité, la densité sont telles que les fils de poils (21) se plient, sous l'effet du liquide arrivant, vers le tissu de soutien (20) et forment un filtre de profondeur avec des canaux d'écoulement coudés et recourbés plusieurs fois,
comportant une barre d'aspiration (13) qui fait face au côté poilu du tissu filtrant avec fente d'aspiration (17) pour aspirer un courant de lavage à contre-courant à travers le tissu filtrant, avec une vitesse d'écoulement telle que les fils de poils se dressent dans le contre-courant dans une position qui dépasse du tissu filtrant,
et comportant des moyens destinés à produire un déplacement relatif entre la barre d'aspiration et le tissu filtrant (6) dans un sens de déplacement parallèle au tissu filtrant, caractérisé en ce que la barre d'aspiration (13) présente au moins, sur le côté de la fente d'aspiration (17) située à l'avant par rapport au déplacement relatif, une surface (18) qui est tournée vers le tissu filtrant (6) et qui fait face au tissu filtrant (6) à une distance si réduite qu'elle agit sur les fils de poils (21) et empêche ceux-ci de se dresser.

5. Dispositif selon la revendication 4, caractérisé en ce que la surface (18) forme une arête vive (19) sur le bord de la fente d'aspiration (17).

6. Dispositif selon la revendication 4 ou 5, caractérisé en ce que la largeur (B) de la fente d'aspiration (17) est supérieure à la longueur des fils de poils (21).

7. Dispositif selon la revendication 6, caractérisé en ce que la largeur (B) de la fente d'aspiration (17) est un multiple de la longueur des fils de poils (21).

8. Dispositif selon l'une des revendications 4 à 7, caractérisé en ce que les fils de poils (21) sont constitués de multifilaments qui se détachent en monofilaments dans les zones terminales (22) du fil de poil (21).
